Europäisches Patentamt

European Patent Office

Office européen des brevets

(19)

(11) **EP 1 128 049 B1**

(12) **EUROPEAN PATENT SPECIFICATION**

(45) Date of publication and mention
of the grant of the patent:
**26.04.2006 Bulletin 2006/17**

(51) Int Cl.:
*F02D 41/38* (2006.01)   *F02D 41/22* (2006.01)
*F02D 41/40* (2006.01)

(21) Application number: **01102519.4**

(22) Date of filing: **05.02.2001**

(54) **Fuel pressure control device for high pressure fuel injection system**

Kraftstoff-Drucksteuervorrichtung für ein Hochdruckkraftstoff-Einspritzsystem

Commande de pression de carburant pour un système d'injection à haute pression

(84) Designated Contracting States:
**DE**

(30) Priority: **23.02.2000 JP 2000046044**

(43) Date of publication of application:
**29.08.2001 Bulletin 2001/35**

(73) Proprietor: **Mazda Motor Corporation
Aki-gun,
Hiroshima (JP)**

(72) Inventors:
 • **Saito, Tomoaki,
c/o Mazda Motor Corporation
Aki-gun,
Hiroshima (JP)**

 • **Nishida, Takumi,
c/o Mazda Motor Corporation
Aki-gun,
Hiroshima (JP)**

(74) Representative: **Zinnecker, Armin et al
Lorenz-Seidler-Gossel,
Widenmayerstrasse 23
80538 München (DE)**

(56) References cited:
 **EP-A- 0 860 600**          **DE-A- 19 712 143**
 **DE-A- 19 735 561**       **US-A- 5 975 056**

 • **PATENT ABSTRACTS OF JAPAN vol. 1998, no.
13, 30 November 1998 (1998-11-30) & JP 10
205383 A (ISUZU MOTORS LTD), 4 August 1998
(1998-08-04)**

**Description**

The present invention relates to a control system for an internal combustion engine.

Conventionally, there have been known fuel injection control systems for a multiple-cylinder engine which include a fuel injection device which injects fuel directly into a combustion chamber of each of the cylinders and is connected to a common rail (a pressure accumulator common to all of the cylinders) for accumulating pressurized fuel supplied to the fuel injector by a fuel pump. Such a fuel injection control system is known from Japanese Unexamined patent application No. 8- 4577. The fuel injection control system is adapted and designed so as to make a diagnosis of operational normality or operational abnormality of the fuel injection device. According to the fuel injection control system, the diagnosis of operational abnormality is made by comparing a difference of a measured change in pressure in the common rail (which is hereafter referred to common rail pressure) from an estimated change in common rail pressure before and after fuel injection with a reference value. The change in common rail pressure before and after fuel injection is estimated on the basis of an amount of fuel to be injected and a volume elastic coefficient of the fuel. Another fuel injection control system is known from Japanese Unexamined patent application No. 10 - 238392. The fuel injection control system is adapted and designed so as to have first diagnostic means for making a diagnosis of operational abnormality of the fuel injection device or the fuel injection control on the basis of a change in common rail pressure before and after pressurizing and forcing fuel into the common rail by a fuel pump and second diagnostic means for making the diagnosis of operational abnormality by comparing the difference of the change in common rail pressure with the reference value. When the fuel injection device is judged to be abnormal both on the basis of the change in common rail pressure before and after fuel injection and on the basis of the change in common rail pressure before and after pressurizing and forcing fuel to the common rail, it is eventually decided that the fuel injection device is operationally abnormal. Specifically, the additional diagnosis of abnormality is made by comparing a difference of a measured change in common rail pressure from an estimated change in common rail pressure before and after pressurizing and forcing fuel to the common rail with a reference value. The change in common rail pressure before and after pressurizing and forcing fuel is estimated on the basis of an amount of fuel to be forced to the common rail by the pump and a volume elastic coefficient of the fuel. Therefore, the fuel injection device is not regarded as operationally abnormal unless it is decided to be operationally abnormal on the basis of the change in common rail pressure before and after pressurizing and forcing fuel to the common rail even though it is decided to be operationally abnormal on the basis of the change in common rail pressure before and after fuel injection which is caused by pulsation of the common rail pressure resulting from fuel injection through the fuel injection device.

A further fuel injection control system known from Japanese Unexamined patent application No. 10 - 299557 uses a volume elastic coefficient in the diagnosis of operational abnormality of the fuel injection device and corrects the volume elastic coefficient on the basis of a fuel pressure or on the basis of a fuel temperature.

Another control system for a common rail engine is disclosed in DE 197 35 561 A1. This document teaches to measure the fuel pressure at predetermined time intervals and not to carry out any fuel pressure measurements during fuel injection.

DE 197 12 143 A1 discloses a control system for a common rail engine whereby the fuel injection is split into a pre-fuel injection and a main fuel injection. For the purpose of quantitative correction of the main fuel injection, a correction value is applied which takes into account fluctuations of fuel pressure due to the pre-fuel injection.

The fuel injection device according to JP 10205383 discloses to keep a constant time period between the completion of the pilot fuel injection and the start of the main fuel injection in order to prevent the engine speed from being unstabilized by the fluctuation of fuel pressure generated with the completion of the pilot fuel injection.

Because a change in common rail pressure before and after fuel injection increases with a rise in fuel injection pressure, the pulsation of common rail pressure continues for a while after fuel injection. In the multi-shot fuel injection which refers to a sophisticated technology having been developed by the applicant of this application for dividing a given amount of fuel into a plurality of parts and intermittently injecting the parts of fuel with multiple shots at appropriate intervals near a top dead center of a compression stroke so that a fuel mixture continues to bum without a break in the combustion chamber, there possibly occurs amplified pulsation of common rail pressure due to a resonance between an injection cycle of the multi-shot fuel injection and a change in the common rail pressure. In an event where there is a high possibility of an occurrence of pulsation of common rail pressure, the conventional diagnostic technique often encounters such a diagnostic failure that the first diagnostic means makes a decision of abnormality resulting from the pulsation of common rail pressure even when the fuel injection device or the fuel injection control is normal.

It is therefore an object of the present invention to provide a control system for an engine which prevents a diagnostic failure occurring resulting from pulsation of fuel pressure in an accumulator such as a common rail.

It is another object of the present invention to provide a control system for an engine which, when controlling fuel pressure in an accumulator such as a common rail toward a target level on the basis of a change in fuel pressure before and after fuel injection, prevents the control of the fuel pressure from being affected by pulsation of the fuel pressure in the accumulator.

The above objects of the invention are accomplished by an engine control system which avoid pulsation of fuel pressure in an accumulator such as a common rail in detecting the fuel pressure that is used in controlling the fuel pressure or in making a diagnosis of abnormality of the control of fuel injection.

According to an aspect of the present invention, the engine control system for an engine comprises:

fuel injectors for injecting fuel directly into combustion chambers of the engine; accumulator means such as a common rail for accumulating fuel at a high pressure and directing fuel to the fuel injectors; pressure regulator means for regulating fuel pressure in the accumulator means; fuel injection control means for controlling the fuel injector to inject fuel; monitoring means for monitoring fuel pressure in the accumulator means; and

engine operation control means for performing a diagnosis of abnormality of fuel injection control either on the basis of a monitored fuel pressure monitored by the monitoring means at injection of fuel by the fuel injector or on the basis of a leveled value of the monitored fuel pressure on which a preceding leveled value is reflected.

Specifically, because when the fuel injector injects fuel, a drop in the fuel pressure in the accumulator means occurs, if there occurs an event where a great difference is caused between a degree of the drop in the fuel pressure and a degree of an expected drop in the fuel pressure, in other words, where the fuel pressure has not yet lowered to an expected level of fuel pressure (the drop in the fuel pressure is comparatively large or comparatively small), or an event where a dropping rate of the fuel pressure is unexpectedly larger or smaller than a predetermined dropping rate, the fuel injection control is regarded as having abnormality lying in an operational failure of the fuel injector, fuel leakage from the accumulator means, etc. Although the dropping rate of the fuel pressure in the accumulator means is found on the basis of a value related to fuel pressure in the accumulator means monitored by the monitoring means or on the basis of a leveled value of the monitored fuel pressure on which a preceding leveled value is reflected, the monitored value or the leveled value of the monitored fuel pressure is affected by pulsation possibly which is caused in the fuel pressure in the accumulator means by fuel injection, as a result of which, the reliability of the diagnosis of abnormality lowers.

Therefore, according to the present invention, the engine control system is constructed so as to avoid pulsation of fuel pressure in the accumulator means in detecting the fuel pressure that is used in controlling the fuel pressure or in making a diagnosis of abnormality of the control of fuel injection by setting a delay period of time for which the engine operation control means delays a timing of making the diagnosis of abnormality on the basis of a monitored fuel pressure in the accumulator means after fuel injection or on the basis of a leveled value of the monitored fuel pressure to a point of time after the fuel pressure in the accumulator means after fuel injection falls to the most lower level.

The monitoring means for monitoring fuel pressure in the accumulator means may be a pressure sensor which measures fuel pressure in the accumulator means such as a common rail directly or a pressure sensor which measures detects fuel pressure in the accumulator means indirectly by measuring a load acting on a fuel supply source for pressurizing and supplying fuel into the accumulator means or on pressure regulating means for pressurizing fuel.

The engine operation control means performs a diagnosis of abnormality of fuel injection control either on the basis of a monitored fuel pressure or on the basis of a leveled value of the monitored fuel pressure and determines the delay period of time so that the delay period of time terminates after a point of time until which pulsation of the fuel pressure caused by the fuel injection converges as small as having no substantial effect on the diagnosis of abnormality of fuel injection control. Setting the delay period of time like this eliminates substantial effect of pulsation of the fuel pressure on the measured fuel pressure after a lapse of the delay period of time or on the leveled value of the measured pressure, so as to enable a highly reliable diagnosis of abnormality of the fuel injection control. The delay period of time may be extended longer as the fuel pressure in the accumulator means at fuel injection becomes larger. Although a time in which pulsation of the fuel pressure in the accumulator means converges becomes longer as the fuel pressure at fuel injection rises, the extended delay period of time avoids pulsation of the fuel pressure in the accumulator means in detecting the fuel pressure that is used in making the diagnosis of abnormality of the fuel injection control.

In the engine control system in which the delay period of time is determined so as to terminate after a point of time until which pulsation of the fuel pressure caused by the fuel injection converges as small as having no substantial effect on the diagnosis of abnormality of fuel injection control, the fuel injection control means may perform fuel injection in a pattern of multi-shot fuel injection in which a given amount of fuel is divided into a plurality of parts and intermittently injected with multiple shots at regular intervals near a top dead center of a compression stroke. In this case, the engine operation control means extends the delay period of time longer as the number of parts increases Although a time in which pulsation of the fuel pressure in the accumulator means converges becomes longer as the number of shots into which fuel injection of a given amount of fuel is divided increases, the extended delay period of time avoids pulsation of the fuel pressure in the accumulator means in detecting the fuel pressure that is used in making the diagnosis of abnormality of the fuel injection control.

Further, in the engine control system in which the delay period of time is determined so as to terminate after a point of time until which pulsation of the fuel pressure caused by the fuel injection converges as small as having no substantial effect on the diagnosis of abnormality of fuel injection control, the fuel injection control means may perform fuel injection in a pattern in which a given amount of fuel is injected through a main fuel injection near a top dead center of a compression stroke and a post fuel injection on either an expansion stroke or an exhaust stroke after the main fuel injection. In this case, the engine operation control means performs the diagnosis of abnormality of fuel injection control on either one of the main fuel injection and the post fuel injection and changes a timing of the post fuel injection to a point of time until which pulsation of the fuel pressure caused by the main fuel injection converges as small as having no substantial effect on fuel injection pressure of the post fuel injection when performing the diagnosis of abnormality of fuel injection control. In the event where, when performing the diagnosis of abnormality of the main fuel injection, the time to implement the post fuel injection comes before pulsation of the fuel pressure in the accumulator means resulting from the main fuel injection converges as small as having no substantial effect on the diagnosis of abnormality of fuel injection control, it is necessary to make the diagnosis of abnormality of the main fuel injection on the basis of a fuel pressure monitored during duration of the pulsation of the fuel pressure or on the basis of a leveled value of the monitored fuel pressure. This causes aggravation of the diagnostic reliability. On the other hand, in the event where, when performing the diagnosis of abnormality of the post fuel injection, the time to implement the post fuel injection comes before pulsation of the fuel pressure in the accumulator means resulting from the main fuel injection converges as small as having no substantial effect on the diagnosis of abnormality of fuel injection control, the post fuel injection itself is adversely effected by the pulsation of the fuel pressure in the accumulator means, so that a diagnostic failure is easily caused. Therefore, the engine control system of the present invention implements the post fuel injection after the pulsation of the fuel pressure in accumulator means has converged, so as to provide not only the diagnosis of abnormality of the main fuel injection but also the diagnosis of abnormality of the post fuel injection with high diagnostic reliability.

In the engine control system in which the delay period of time is determined so as to terminate after a point of time until which pulsation of the fuel pressure caused by the fuel injection converges as small as having no substantial effect on the diagnosis of abnormality of fuel injection control performed in the pattern in which a given amount of fuel is injected through a main fuel injection near a top dead center of a compression stroke and a post fuel injection on either one of an expression stroke and an exhaust stroke after the main fuel injection, the engine operation control means may causes the pressure regulator means to start control of a rise in fuel pressure in the accumulator means a predetermined period of time in advance of the main fuel injection following the post fuel injection so as to regulate the fuel pressure in the accumulator means to a target level either on the basis of a monitored fuel pressure in the accumulator means at the post fuel injection or on the basis of a leveled value of the monitored fuel pressure on which a preceding leveled value is reflected. In this case, the engine operation control means performs the diagnosis of abnormality of fuel injection control on either one of the main fuel injection and the post fuel injection and changes a timing of the post fuel injection so that the delay period of time terminates before a start of the control of a rise in the fuel pressure in the accumulator means when performing the diagnosis of abnormality of the post fuel injection control. According to the engine control system, while the diagnosis of abnormality of the post fuel injection control is accurately made on the basis of the fuel pressure in the accumulator means monitored after a lapse of the delay period of time from the post fuel injection or on the basis of a leveled value of the monitored fuel pressure, a rise in fuel pressure in the accumulator means is started at a point of time a predetermined period of time in advance of the main fuel injection following the post fuel injection on the basis of the fuel pressure in the accumulator means monitored after a lapse of the delay period of time from the post fuel injection or on the basis of a leveled value of the monitored fuel pressure, so that the fuel pressure in the accumulator means is reliably risen to a target level for the following main fuel injection without being adversely effected by pulsation of the fuel pressure in the accumulator means resulting the post fuel injection. That is, setting the post fuel injection timing as described above ensures provision of the delay period of time and the predetermined period of time. This provides the diagnosis of abnormality of the post fuel injection with high diagnostic reliability. In addition, this ensures the control of a rise in fuel pressure in the accumulator means for the diagnostic of abnormality of the main fuel injection, so as to provide the diagnosis of abnormality of the main fuel injection with high diagnostic reliability.

According to another aspect of the present invention, the engine control system for an engine comprises fuel injectors for injecting fuel directly into combustion chambers of the engine; accumulator means for accumulating fuel at a high pressure and directing said fuel to said fuel injectors; pressure regulator means for regulating fuel pressure in the accumulator means; fuel injection control means for controlling the fuel injector to inject a given amount of fuel through main fuel injection and post fuel injection; monitoring means for monitoring a fuel pressure in the accumulator means; pressure control means for starting control of a rise in the fuel pressure in the accumulator means a predetermined period of time in advance of the main fuel injection following the post fuel injection so that the fuel pressure in the accumulator means reaches a target level either on the basis of a monitored fuel pressure in the accumulator means monitored by the pressure monitoring means at the post fuel injection or on the basis of a leveled value of the monitored fuel pressure on which a preceding leveled value is reflected; and convergence period setting means for setting a convergence period of time in which pulsation of the fuel pressure caused by the post fuel injection converges as small as having no substantial effect on the control of a rise in the fuel pressure in the accumulator means. The fuel injection control means sets a timing of the post fuel injection so that the delay period of time terminates before a start of the control of a rise in said fuel pressure in the accumulator means, and the pressure control means implements the control of a rise in the fuel pressure in the accumulator means either on the basis of a fuel pressure in the accumulator measured by the monitoring means or on the basis of a leveled value of the monitored fuel pressure on which a preceding leveled value is reflected after a lapse of said convergence period of time.

Setting the post fuel injection timing as described above ensures provision of the convergence period of time and the predetermined period of time. This enables the ensured control of a rise in fuel pressure in the accumulator means for the following main fuel injection on the basis of a monitored fuel pressure in the accumulator means measured after a lapse of the convergence period of time which is not effected by pulsation or on the basis of a leveled value of the monitored fuel pressure.

As described above, because the engine control system of the present invention sets the delay period of time or the convergence period of time, even when pulsation of fuel pressure is produced in the accumulator means by the fuel injection, the engine control system performs the control of a rise in fuel pressure in the accumulator means or the diagnosis of abnormality of the fuel injection control without being effected by the pulsation, so as to provide the diagnosis of abnormality with improved reliability or so as to cause an ensured rise in fuel pressure in the accumulator to a target level, thereby ensuring injection of a given amount of fuel.

The above and other objects and features of the present invention will be clearly understood from the following description with respect to the preferred embodiments thereof when considered in conjunction with the accompanying drawings, in which:

Figure 1 is a schematic illustration showing a control system installed to an internal combustion engine in accordance with an embodiment of the present invention;
Figure 2 is a time chart of multi-fuel injection in the fuel injection control performed by the control system shown in Figure 1;
Figures 3A and 3B are respective parts of a flow chart illustrating a sequence routine of common rail pressure control;
Figure 4 is a flow chart illustrating a sequence routine of fuel injection control;
Figures 5A to 5C are respective parts of a flow chart illustrating a sequence routine of control of a diagnosis of operational abnormality of a fuel injection device;
Figure 6 is a time chart of operation of the fuel injection device during the control of a diagnosis of operational abnormality of the fuel injection device;
Figures 7A and 7B are time charts of operation of the fuel injection device for the post fuel injection; and
Figure 8 is a part of a flow chart illustrating another sequence routine of the control of a diagnosis of operational abnormality of a fuel injection device.

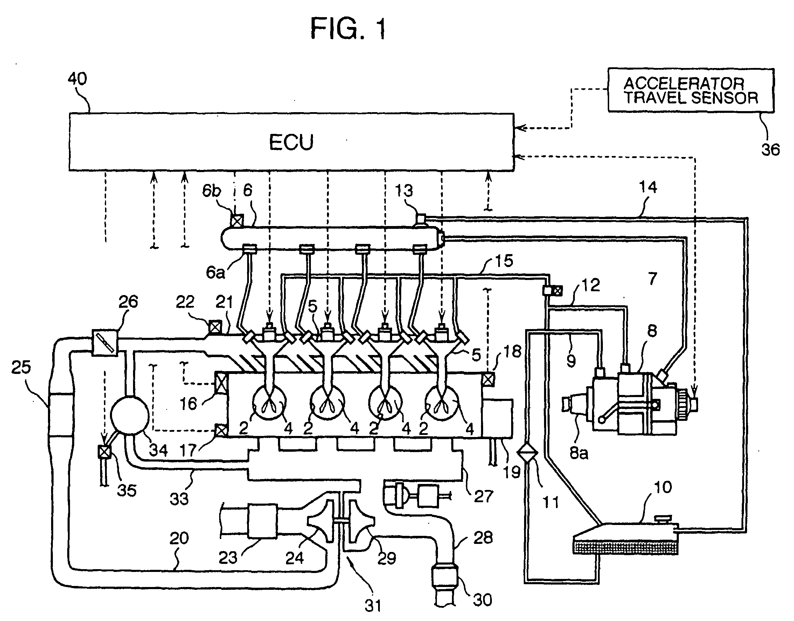

Referring to the drawings in detail, and, in particular, to Figure 1, a control system A according to a preferred embodiment is shown as installed to an in-line four cylinder diesel engine 1 mounted to a vehicle (not shown). The diesel engine 1 has four cylinders 2 arranged in a straight line. Pistons (not shown) are received in the cylinders 2, respectively to slide up and down. A combustion chamber 4 is formed between the cylinder 2 and the piston. The combustion chamber 4 is provided with a fuel injector 5, namely a fuel injection valve having a plurality of nozzle holes. Each fuel injector 5 is aligned with a vertical center line of the cylinder 2 and connected to an accumulator, such as a common rail 6 for accumulating fuel at a pressure higher than an injection pressure, through a discrete accumulator pipe 6a. The fuel injector 5 opens and closes at an injection timing predetermined for cylinder to inject a given amount of fuel directly into the combustion chamber 4 of each of the cylinder 2.

The common rail 6 is provided with a sensor capable of detecting a physical value regarding fuel pressure in the common rail 6 such as a pressure sensor 6b. A high pressure fuel supply passage 7 connects the common rail 6 to a fuel pump 8. This fuel pump 8 is driven by an drive shaft 8a connected to a crankshaft (not shown) of the diesel engine 1 to draw up fuel in a fuel tank 10 through a fuel supply pipe 9 filtering it through a fuel filter 11 and pressurizes and forces it to the common rail 6 through a jerk fuel pressurizing and supplying system. The fuel pump 8 has an electromagnetic relief valve 12a operative to regulate a discharge amount of fuel of the fuel pump 8 by permitting the fuel supplied through the pressurizing and supplying system partly into a return pipe 12. The relief valve 12a, which operates as pressure regulator, is controlled in opening according to a fuel pressure detected by the pressure sensor 6b to feedback control the common rail pressure to a predetermined value. The common rail 6 is further provided with pressure limiting means 13 for discharging fuel from the common rail 6 when the common rail pressure becomes higher than the predetermined value. The fuel discharged from the common rail 6 returns into the fuel tank 10 through a fuel return pipe 14. Fuel injected through the fuel injector 5 partly returns into the fuel tank 10 through a fuel return pipe 15.

The diesel engine 1 is further provided with an angle sensor 16 operative to detect a rotational angle of the crankshaft, an angle sensor 17 operative to detect a rotational angle of an intake camshaft or an exhaust camshaft, and a temperature sensor 18 operative to detect cooling water temperature which is substitutive for engine temperature. The diesel engine 1 is additionally provided with a vacuum pump 19 which is driven by the camshaft. The crank angle sensor 16 comprises a disk attached to the crankshaft and an electromagnetic pick-up disposed facing the periphery of the disk The disk is formed with radial projections arranged at regular intervals along the periphery thereof. The electromagnetic pick-up generates a pulse signal whenever it detects the radial projection. The cam angle sensor 17 comprises radial projections formed at regular intervals on the camshaft and an electromagnetic pick-up disposed facing the camshaft. The electromagnetic pick-up generates a pulse signal whenever it detects the radial projection.

The diesel engine 1 is equipped with an intake air passage 20 through which fresh air is introduced into the combustion chambers 4. Specifically, the intake air passage 20 is provided in order from the upstream end with an air cleaner (not shown), a hot-film type air flow sensor 23 operative to detect a flow rate of intake air introduced into the intake passage, a turbine 29 forming part of a variable geometric turbo-supercharger (VGT) 31 which will be described later, an inter-cooler 25 operative to cool down compressed air from the blower 24, and an intake air throttle valve 26 operative to change a cross-sectional area of the intake passage 20 such as a butterfly valve which is formed with a slot or a notch so as to permit intake air even while it is fully closed. The intake air throttle valve 26 is actuated by an actuator (not shown) to variably open and close. The intake air passage 20 is connected to a surge tank 21 at its downstream end. The surge tank 21 is communicated with the combustion chambers 4 of the cylinders 2 through discrete pipes, respectively. A pressure sensor 22 is installed to the surge tank 21 in order to detect pressure of supercharging air that is forced by a turbo-supercharger 31

The diesel engine 1 is equipped with an exhaust passage 28 connected to the diesel engine 1 through an exhaust manifold 27 in communication with the combustion chamber 4 of the cylinders 2. Exhaust gas is discharged into the exhaust passage 28 through the exhaust manifold 27 from the combustion chambers 4. The exhaust passage 28 is provided in order from the upstream end with a turbine 29 forming part of the turbo-supercharger 31, and a catalytic converter 31 for eliminating harmful emissions and thereby purifying the exhaust gas. The turbine 29 is provided with a number of movable vanes arranged at regular intervals therearound. A cross-sectional area of a turbine nozzle that is defined between each adjacent vanes is varied by movement of the vanes so as thereby to regulate a flow rate of exhaust gas passing into the turbine 29. The blower 24 is driven by the turbine 29 to compress the exhaust gas passing through the turbine 29 and to charge it into the combustion chambers 4. Furthermore, the diesel engine 1 is equipped with an exhaust gas recirculation (EGR) system which comprises an exhaust gas recirculation (EGR) passage 33 extending from the exhaust passage 28 downstream from the turbine 29 and an exhaust gas recirculation (EGR) valve 34 disposed in the exhaust gas recirculation passage 33 and connected to the intake passage 20 downstream from the intake air throttle valve 26. The EGR valve 34 permits exhaust gas partly into the intake passage 20 through the EGR passage 33. The EGR valve 34, which is of a vacuum operated type, is operated by vacuum from a vacuum pump 19 to vary its opening so as thereby to vary linearly a cross-sectional area of the EGR passage 33. The amount of exhaust gas that is recirculated into the intake passage 20 is regulated according to opening of the EGR valve 34.

Control signals are output from an electronic control unit (ECU) 40 to actuate and control the fuel injector 5, the fuel pump 8, the intake air throttle valve 26, the EGR valve 34 and so forth. Signals from various sensors including at least the air flow sensor 23, the fuel pressure sensor 6b, the crank angle sensor 16, the cam angle sensor 17, the temperature sensor 18 and an accelerator travel sensor 36 which detect a travel of an accelerator pedal (not shown). The ECU 40 performs fuel injection control in which a fuel injection timing and an amount of fuel injection are controlled by controlling the fuel injector 5 according to engine operating conditions and a diagnosis of abnormality of the fuel injection control on the basis of common rail pressure Pc, and hence fuel injection pressure, which is controlled by operating a relief valve 12a according to fuel pressure which is detected by the fuel pressure 6b, control of an amount of intake air by operating the intake air throttle valve 26. The ECU 40 further performs exhaust gas recirculation control by controlling the EGR valve 34 and supercharge control by controlling the vanes of the turbo-supercharger 31.

The following description will be directed to the common rail pressure control, the fuel injection control and the diagnosis of abnormality of fuel injection which are performed by the ECU 40. The common rail pressure *Pc* is controlled so as to reach a target common rail pressure *Pcr* by controlling a valve closing timing of the relief valve 12a. The valve closing timing is set to a basic control value *T-Pcv* added by a feedback control value *T-Pcfb.* The basic control value *T-Pcv,* which is used to make a diagnosis of abnormality as described later, is calculated from a current engine speed of rotation *Ne*, a current common rail pressure *Pc* after fuel injection, a target amount of fuel injection *Qt* and an offset value *ofs*. The feedback control value *T-Pcfb* is calculated by giving a proper gain in PID actions on the basis of a difference between the target common rail pressure *Pcr* corresponding to a target total amount of fuel injection *Qt* necessary for one combustion cycle, and the current common rail pressure *Pc* after fuel injection. The offset value *ofs,* which is used in the calculation of the basic control value *T-Pcv* in order to restrain individual differences among components of the fuel injection devices, is obtained by learning the feedback control value *T-Pcfb*.

In the fuel injection control, fuel injection is performed in two different fuel injection modes. In one of the fuel injection modes, only main fuel injection is implemented at a timing near a top dead center of a compression stroke so that the diesel engine 1 provides target output torque. In another fuel injection mode, post fuel injection is implemented after the main fuel injection in order to supply a reduction substance represented by hydrocarbon (HC) for NOx conversion to an exhaust gas purifying catalyst. The main fuel injection is performed in two different patterns, namely batch fuel injection in which a given amount of fuel is injected all at once with a single-shot fuel injection and split fuel injection in which a given amount of fuel is divided into a plurality of parts and intermittently injected with the same number of multiple shots as a number of the parts at appropriate injection intervals $\Delta t$. The batch fuel injection (which is hereafter referred to as one-shot fuel injection) is performed by, if necessary, implementing pilot fuel injection to inject a small amount of pilot fuel at a timing before a top dead center of compression stroke in advance to injection of the remaining amount of fuel. The split fuel injection (which is hereafter referred to multi-fuel injection) includes, for example, two-shot fuel injection and three-shot fuel injection. The fuel injection modes and patterns are selectively used on the basis of a fuel injection control map stored in a memory of the ECU 40. The fuel injection control map defines the fuel injection modes and patterns with respect to engine operating conditions including at least an engine speed of rotation, an accelerator travel, an engine temperature and a catalyst temperature.

A basic amount of fuel injection (an amount of main fuel injection), an amount of post fuel injection and fuel injection timings are electronically stored in the form of map in the memory of the ECU 40 and read out according to an engine operating condition. The post fuel injection timing is corrected so as to keep the post fuel injection away from a period of pulsation of common rail pressure upon implementation of the diagnosis of abnormality and also so as to prevent control of a rise in common rail pressure from being affected by the post fuel injection.

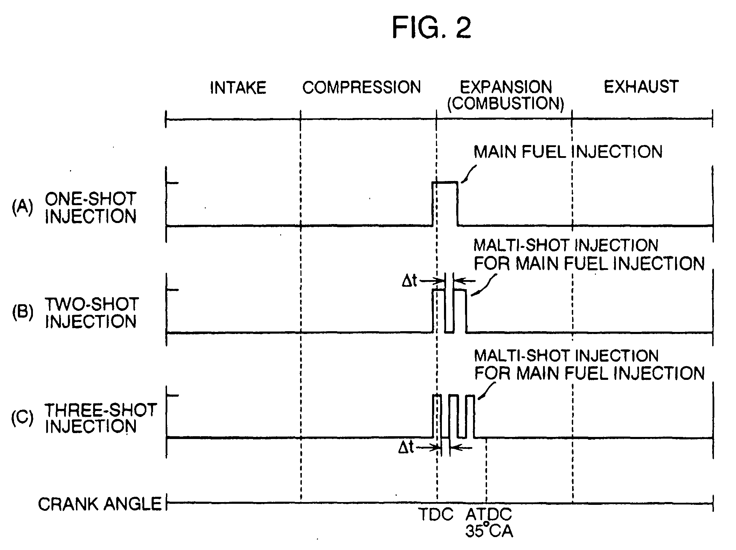

Figure 2 is a time chart showing the multi-shot fuel injection, i.e. the one-shot fuel injection (B) and the two-shot fuel injection (C), in contrast with the one-shot fuel injection (A). In the multi-shot fuel injection, a given amount of fuel is divided into two or three parts and intermittently injected with two or three shots such that fuel combustion continues in the combustion chamber 4 in a period near a top dead center of a compression stroke. The duration of pulsing the fuel injector 5 is preferably less than 800 $\mu$ secs. for each shot of fuel injection The injection interval $\Delta t$ between each adjacent shots is preferably between 50 $\mu$ secs. and 100 $\mu$ secs. The second shot of fuel injection is preferably made at a timing after a top dead center of a compression strike. It is of course to perform, if necessary, the main fuel injection with more-than four shots of fuel injection.

In the basic operation of the multi-fuel injection, fuel injected from the fuel injector 5 spreads forming a generally conic shape of fuel spray in the combustion chamber 4, and then grows into fine fuel drops repeating a breakup due to frictional contact with air. The fuel drops evaporate and turn to fuel vapors. At this time, since the given amount of fuel is divided into parts and intermittently injected intermittently with a plurality shots of fuel injection, the proportion of premixed combustion on the first shot of fuel is relatively small, so that combustion pressure and temperature are prevented from rising in excess in an early period of combustion. This results in a decrease in NOx generation. The injection interval $\Delta t$ set greater than 50 $\mu$ secs. prevents almost all of fuel drops of a part of fuel following a preceding part of fuel from catching up the fuel drops of the preceding part of fuel. In particular, when implementing a second shot of fuel injection at a timing after the dead top center of a compression stroke, fuel injected through the second shot of fuel injection bums immediately. As a result, the temperature in the combustion chamber 4 rises greatly and, as a result of which, the viscosity of compressed air in the combustion chamber 4 rises. Therefore, the fuel injected through the third shot of fuel injection is immediately subjected to a drag on progress of changing into fuel drops, so that fuel drops of the second part of fuel do not catch up the fuel drops of the second part. The duration of each shot of fuel which is less than 800 $\mu$ secs. provides only a small amount of fuel injection for each shot. This restrains fuel drops from recombining with one another to a minimum. Accordingly, it is possible to significantly improve a mixed condition of fuel vapors with air by, for example, by accelerating atomization and vaporization of fuel which is caused by increasing a fuel injection velocity so as thereby to rise fuel pressure. The injection interval $\Delta t$, which is less than 100 $\mu$ secs., causes fuel to start burning before completion of burning of fuel injected through a preceding shot of fuel injection. This prevents discontinuous combustion of fuel supplied through the multi-shot fuel injection.

In short, it is realized to improve fuel efficiency and to restrain smoke generation by significantly improving the combustion condition of fuel which is achieved by implementing the multi-shot fuel injection for the main fuel injection. Further, because, while implementing the multi-shot fuel injection relatively retards completion of the main fuel injection, vaporization and atomization of the fuel injected intermittently during the multi-shot fuel injection are so satisfied as to cause diffusion combustion, there is no aggravation of combustion condition which occurs when correctly retarding a fuel injection timing. The multi-shot fuel injection rather causes significantly effective transmission of expansion force of burned gas to the piston 3 due to a high pressure in the combustion chamber 4 kept for a relatively long period of time. As a result, the improvement of fuel efficiency is further consolidated resulting from an increase in mechanical efficiency.

The diagnosis of abnormality of the fuel injection control is performed on the basis of fuel pressure that is measured by the pressure sensor 6b or a leveled value of fuel pressure such as an arithmetical mean of fuel pressure. Specifically, it is determined that the fuel injection control is abnormal when a change in the fuel pressure or a change in the arithmetical mean of fuel pressure exceeds a specified threshold value. In this instance, the diagnosis of abnormality is performed for the comprehensive process of fuel injection control on the basis of the feedback control value *T-Pcfb*, for the process of main fuel injection (multi-shot fuel injection) control on the basis of measured fuel pressure after the main fuel injection, and for the process of post fuel injection control on the basis of measured fuel pressures after the post fuel injection. The common rail pressure after convergence of pulsation resulting from fuel injection is adopted as the measured fuel pressure. In order to eliminate measurement while the common fuel pressure pulsates, a timing at which the measurement of the common rail pressure is made is delayed from the fuel injection such that the higher the fuel pressure is at the fuel injection or the larger the number of divided parts of a given amount of fuel is, the longer the delay time is.

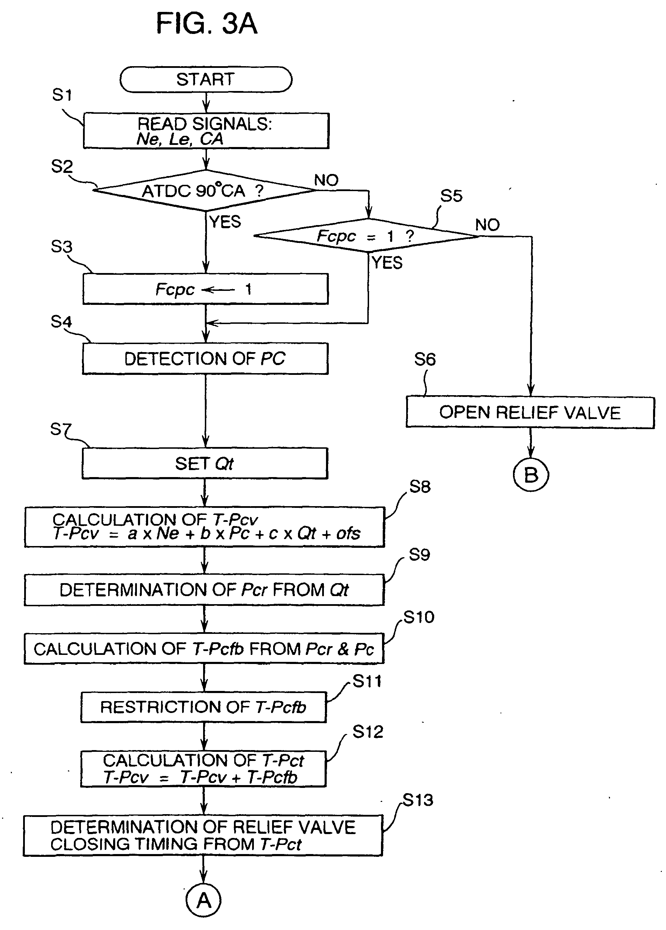

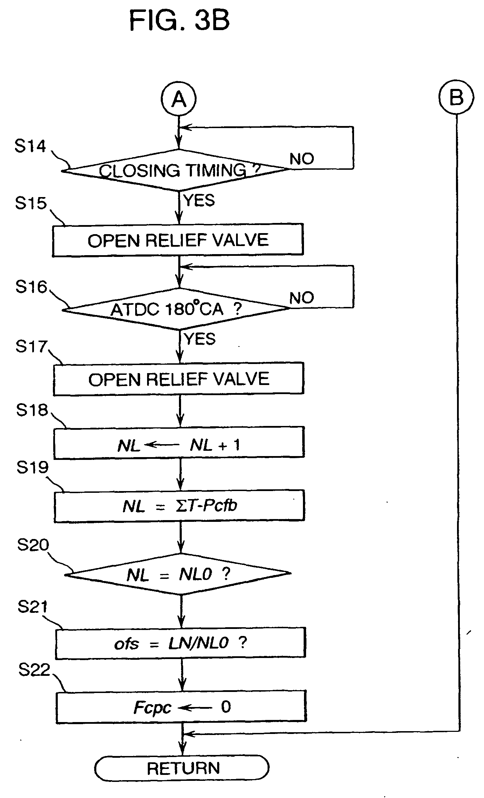

Figures 3A and 3B are respective parts of a flow chart illustrating a sequence routine of the common rail pressure control which is performed for each cylinder. When the sequence logic commences and control proceeds to a function block at step S1 where signals including an engine speed of rotation *Ne*, an accelerator opening *Le*, and a crank angle of rotation *CA* are read in. Subsequently, a judgement is made at step S2 as to whether the crank angle of rotation *CA* is equal to or greater than a crank angle of 90° after a top dead center (ATDC 90°). When the crank angle of rotation *CA* is equal to or greater than the crank angle of ATDC 90-, after setting a flag *Fcpc* to a state of "1" at step S3, measurement is made at step S4 to detect a current common rail pressure *Pc* which is used for the common rail pressure control and the diagnosis of abnormality of the fuel injection control. The flag *Fcpc* set to the state of "1" indicates that the control of rising the common rail pressure is progressing. On the other hand, when the crank angle of rotation *CA* is less than the crank angle of ATDC 90°, then, another judgement is made at step S5 as to whether the flag *Fcpc* is down or reset to a state "0", in other words, whether the control of rising the common rail pressure is progressing. When the control of rising the common rail pressure is not progressing, after closing the relief valve 12a at step S6, the sequence logic orders return. On the other hand, when the control of rising the common rail pressure is progressing, the measurement is made at step S4 to detect a current common rail pressure *Pc.*

Subsequently, a calculation is made at step S7 to set a target amount of fuel injection (a total amount of main fuel injection and secondary fuel injection, i.e. post fuel injection) *Qt* which is determined according to an engine operating condition. Further, at step S8, a calculation is made from the engine speed of rotation *Ne*, the common rail pressure *Pc* after the fuel injection, the target amount of fuel injection *Qt*, and an offset value *ofs* to determine a basic control value *T-Pcv* for the control of a timing at which the relief valve 12a is closed. The basic control value *T-Pcv* is calculated from the following equation:

$$T\text{-}Pcv \;\; = \;\; a \;\times\; Ne + b \times Pc + c \times Qt + ofs$$

where *a*, *b* and *c* are predetermined coefficients.

After determining a target common rail pressure *Pcr* correspondingly to the target amount of fuel injection *Qt* at step S9, a calculation is made at step S10 to set a feedback control value *T-Pcfb* on the basis of a difference of the current common rail pressure *Pc* from the target common rail pressure *Pcr*. The feedback control value *T-Pcfb* is restricted between predetermined upper and lower limit values at step S11. Specifically, the upper limit value or the lower limit value is exceeded by the feedback control value *T-Pcfb,* it is substituted for the feedback control value *T-Pcfb.* Subsequently to the restriction of the feedback control value *T-Pcfb,* a practical control value *T-Pct* is determined as a total of the basic control value *T-Pcv* and the feedback control value *T-Pcfb* at step S12. At step S13, the timing of closing the relief valve 12a is set on the basis of the practical control value *T-Pct*. In this instance, in a transitional state of engine operation such as a state immediately after a change in engine operating condition, the restriction is performed so as to make the feedback control value *T-Pcfb* affect the practical control value *T-Pct* as small as possible, thereby preventing the common rail pressure control from overshooting.

After waiting for the valve close timing to reach at step S14, the relief valve 12a is closed at step S15. As a result, the fuel pump 8 supplies fuel into the common rail 6, which is accompanied by a rise in the common rail pressure *Pc* toward the target common rail pressure *Pcr.* Further, waiting for the cam angle of rotation to reach an angle of 180° after the top dead center (ATDC 180° CA) at step S16, the relief valve 12a is opened to stop the supply of fuel into the common rail 6 at step S17. Even while the relief valve 12a is open, the fuel in the common rail 6 and the fuel pump 8 stay therein and the fuel is further supplied from the fuel tank 10 to the fuel pump 8 for another control of rising the common rail pressure. Subsequently, after changing a sampled number of feedback control values *NL* from which an offset value *ofs* is learned by an increment of 1 (one) at step S18, the current feedback control value *T-Pcfb* is added to a preceding integrated feedback control value *T-Pcfb* to obtain a current integrated feedback control value *LN* at step S19. Then, a judgement is made at step S20 as to whether the integrated feedback control value *LN* has reached a predetermined value *LN0.* When the integrated feedback control value *LN* has not yet reached the predetermined value *LN0* at step S20 or after calculating an arithmetic mean of the integrated feedback control value *LN* as the offset value *ofs* at step S21 when the integrated feedback control value *LN* has reached the predetermined value *LN0* at step S20, the flag *Fcpc* is reset to the state of "0" at step S22 and, then, the sequence logic orders return.

As described above, the offset value *ofs* is fixedly determined by monitoring the feedback control value *LN* over a long period of time, so as to restrain individual differences among the fuel injection devices. In addition, the diagnosis of abnormality which will be described later is performed precisely by monitoring the feedback control value

*LN* determined taking the offset value *ofs* into account in a short period of time.

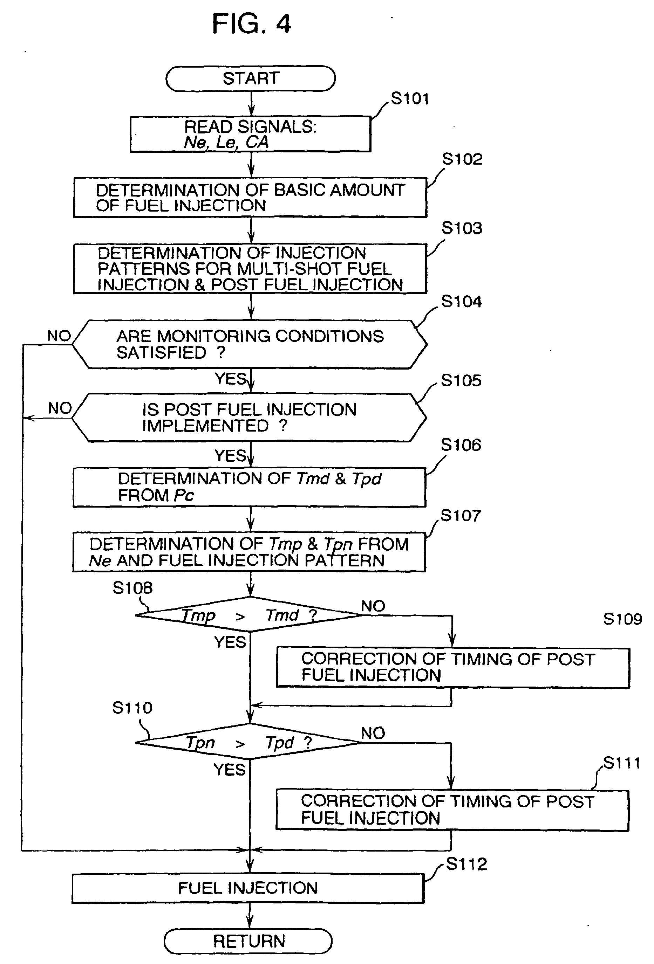

Figure 4 is a flow chart illustrating a sequence routine of the fuel injection control which is performed for each cylinder and repeated every predetermined crank angle of rotation. When the sequence logic commences and control proceeds to a function block at step S101 where signals including an engine speed of rotation *Ne*, an accelerator opening *Le,* and a crank angle of rotation *CA* are read in. Subsequently, a basic amount of fuel injection (an amount of main fuel injection) is read from a fuel injection control map according to an engine demand including a target engine torque which is determined on the basis of the accelerator opening *Le* and the engine speed of rotation *Ne* which is determined on the basis of the crank angle of rotation *CA* at step S102. The fuel injection control map, which is electronically stored in the memory of the ECU 40, defines the optimum amounts of fuel injection experimentally determined with respect to a change in accelerator opening *Le* and a change in engine speed of rotation *Ne*. The basic amount of fuel injection is predetermined so as to increase with an increase in accelerator opening *Le* and/or an increase in engine speed of rotation *Ne*.

At step S103, patterns of the multi-shot fuel injection for the main fuel injection and the post fuel injection are determined. A timing of the multi-shot fuel injection is set to a point of time near a top dead center of compression stroke. For example, the multi-fuel injection timing is advanced more from, for example, a crank angle of 5° before the top dead center (BTDC 5° CA) as a standard point with an increase in the basic amount of fuel injection and is retarded more from the standard point with a decrease in the basic amount of fuel injection. While the diesel engine 1 has not yet warmed up, that is, while the engine cooling water is at a lower temperature, it is operated for warming-up with the fuel injection timing retarded by a predetermined value. Further, the number of parts into which the given amount of fuel is divided for the multi-shot fuel injection and an injection interval Δ*t* are determined according to a temperature of the catalyst of the catalytic converter 31. For example, the three-shot fuel injection is employed when the temperature of the catalyst is low The two-shot fuel injection is employed when the temperature of the catalyst is high The injection interval Δ*t* is set short for the three-shot fuel injection and is set long for the two-shot fuel injection. This is because the larger the number of divided parts of fuel is or the larger the amount of exhaust gas increases, the higher the temperature of exhaust gas becomes, which is advantageous for an increase in the temperature of the catalyst The post fuel injection is determined in patter so as to occur intermittently in order to accelerate NOx reduction by supplying an increased amount of HC to the catalyst For example, an amount of fuel for the post fuel injection is set to be less than a several % of the basic amount of fuel injection, and a timing of the post fuel injection is set between cam angles of 30° and 90° after the top dead center of a compression stroke.

Subsequently, a judgement is made at step S104 as to whether predetermined monitoring conditions are satisfied for implementation of the diagnosis of abnormality. The monitoring conditions include that a predetermined period of time has passed after the engine operation has entered on a steady state, that the diagnosis of abnormality has not yet been implemented, that the diesel engine 1 has warmed up, i.e. the temperature of engine cooling water has exceeded a predetermined value, or the temperature of catalyst has exceeded a predetermined value, that the diesel engine 1 operates at an engine speed of rotation *Ne* lower than a predetermined value (at a lower engine speed of rotation or at a middle engine speed of rotation), and that the diesel engine 1 operates with an engine load lower than a predetermined value (with a lower engine load or with a middle engine load). The reason for including a low engine speed of rotation in the monitoring conditions is that an interval from the main fuel injection for one of the cylinders to the post fuel injection and an interval from the post fuel injection to the main fuel injection for a second one of the cylinders get longer even when fuel injection timings for the respective cylinders are set to the same crank angle of rotation. And as a result of which, pulsation of the common rail pressure occurring every fuel injection does not affect the succeeding fuel injection with an effect of performing the diagnosis of abnormality with an increased precision. The reason for including a low engine load in the monitoring conditions is that, when the given amount of fuel injection is small, the pulsation of common rail pressure is prevented from growing after the post fuel injection due to a low common rail pressure before the fuel injection, the diagnosis accuracy is advantageously improved

When all of the monitoring conditions are satisfied, a judgement is made at step S105 as to whether the post fuel injection is scheduled to be implemented after the multi-shot fuel injection as the main fuel injection. This judgement is made for the reason that, in the event where the post fuel injection is scheduled after the multi-shot fuel injection, the diagnostic accuracy lowers in consequence of the pulsation of common rail pressure depending upon the post fuel injection timing. When the post fuel injection is scheduled, the post fuel injection timing is corrected if necessary. Specifically, the post fuel injection is scheduled, duration of main injection pressure pulsation *Tmd* and duration of post injection pressure pulsation *Tpd* are determined as convergence times at step S106. The duration of main injection pressure pulsation *Tmd* is referred to duration of the pulsation of common rail pressure that occurs following the multi-shot fuel injection and is defined as a convergence time by a period of time from a start of the last shot of the multi-shot fuel injection to a point of time until which the pulsation of common rail pressure falls as small as it does not substantially affect the diagnosis of abnormality of the main fuel injection control. The convergence time is set depending upon the current common rail pressure *Pc* before the multi-shot fuel injection and the number of divided parts of fuel for the multi-shot fuel injection. The duration of post injection pressure pulsation *Tpd* is referred to duration of the pulsation of common rail pressure that occurs following the post fuel injection and is defined as a convergence time by a period of time from a start of the post fuel injection to a point of time until which the pulsation of common rail pressure falls as small as it has no substantially effect on the diagnosis of abnormality of the post fuel injection control. These duration of main and post injection pressure pulsation *Tmd* and *Tpd* are read out from a duration control map electronically stored in the memory of the ECU 40. In this instance, the term "substantial effect" on the diagnosis of abnormality refers to an event where the pulsation of common rail pressure substantially significantly appears in a value of common rail pressure fallen resulting from the fuel injection that is measured for the diagnosis of abnormality. The duration control map defines the duration of main and post injection pressure pulsation *Tmd* and *Tpd* such that they become longer as the current common rail pressure *Pc* rises higher. Further, the duration control map defines the duration of main injection pressure pulsation *Tmd* after main fuel injection such that it becomes longer as the number of divided parts of fuel becomes large. The duration of main injection pressure pulsation *Tmd* is established to be greater than the duration of post injection pressure pulsation *Tpd* because the common rail pressure before the main fuel injection and the amount of main fuel injection are greater than the common rail pressure before the post fuel injection and the amount of post fuel injection, respectively, and, in addition, the common rail pressure causes resonant pulsation during a cycle of the multi-shot fuel injection.

At step S107, calculations are made to determine a period of time after main fuel injection *Tmp* which is between a start of the last shot of the multi-shot fuel injection and a start of the post fuel injection and a period of time after post fuel injection *Tpn* which is between a start of the post fuel injection and a point of time at which a crank angle of ATDC 90° is reached, respectively. The respective calculation is performed on the basis of the fuel injection pattern, namely the fuel injection timings for the multi-fuel injection and the post fuel injection, determined at step S103 and the engine speed of rotation *Ne*. Since the fuel injection timings are determined on the basis of a clank angle of rotation *CA* at step S103, the period of time *Tmp*, *Tpn* that is actually spent is determined on the basis of an engine speed of rotation *Ne* at step S107.

Subsequently, a judgement is made at step S108 as to whether the period of time after main fuel injection *Tmp* is longer than the duration of main injection pressure pulsation *Tmd* after the multi-shot fuel injection. The period of time after main fuel injection *Tmp* longer than the duration of main injection pressure pulsation *Tmd* indicates that the detection of common rail pressure *Pc* necessary for the diagnosis of abnormality of the main fuel injection control and the implementation of post fuel injection can be made after the pulsation of common rail pressure resulting from the multi-shot fuel injection has converged. Therefore, when the period of time after main fuel injection *Tmp* is equal to or shorter than the duration of main injection pressure pulsation *Tmd*, then, at step S109, the post fuel injection timing is changed to a point of time at which the duration of main injection pressure pulsation *Tmd* terminates from a start of the last shot of the multi-shot fuel injection so as thereby to detect a current common rail pressure *Pc* for the diagnosis of abnormality of the main fuel injection and implement the post fuel injection without being affected by the pulsation of common rail pressure. When the period of time after main fuel injection *Tmp* is longer than the duration of main injection pressure pulsation *Tmd* at step S108 or after changing the post fuel injection timing at step S109 when a period of time after main fuel injection *Tmp* is equal to or shorter than the duration of main injection pressure pulsation *Tmd* at step S108, another judgement is made at step S110 as to whether the period of time after post fuel injection *Tpn* is longer than the duration of post injection pressure pulsation *Tpd* after the post fuel injection. The period of time after post fuel injection *Tpn* longer than the duration of post injection pressure pulsation *Tpd* indicates that while the detection of common rail pressure *Pc* necessary for the diagnosis of abnormality of the post fuel injection control can be made after the pulsation of common rail pressure resulting from the multi-shot fuel injection has converged, the control of rising the common rail pressure *Pc* can be implemented for both the succeeding main fuel injection and the succeeding post fuel injection. Accordingly, when the period of time after post fuel injection *Tpn* is equal to or shorter than the duration of post injection pressure pulsation *Tpd,* then, at step S111, the post fuel injection timing is advanced by the duration of post injection pressure pulsation *Tpd* from the crank angle of ATDC 90° so as thereby to detect a current common rail pressure *Pc* for the diagnosis of abnormality of the post fuel injection and implement the control of rising the common rail pressure *Pc*. without being affected by the pulsation of common rail pressure. That a rise in the common rail pressure can be controlled without being affected by the pulsation of common rail pressure indicates that the common rail pressure is enabled to attain a proper value. In consequence, the diagnosis of abnormality for the succeeding fuel injection control is precisely performed. In an event where the diagnosis of abnormality is not implemented, the correction of the post fuel injection timing is not implemented. In the event, differently from the diagnosis of abnormality, the diesel engine operates accompanying no hindrance, and hence the vehicle is driven without any hindrance, even if the common rail pressure is somewhat off an intended value during the ordinary control of fuel injection.

When the period of time after post fuel injection *Tpn* is longer than the duration of post injection pressure pulsation *Tpd* at step S110, or after the correction of post fuel injection timing at step S111 when the period of time after post fuel injection *Tpn* is equal to or shorter than the duration of post injection pressure pulsation *Tpd* at step S110, the fuel injection is implemented at step S112, and then the sequence logic orders return.

When one or more monitoring conditions are not satisfied at step S104, or when the post fuel injection is not scheduled at step S105, the fuel injection is immediately implemented without correcting the post fuel injection timing at step S112.

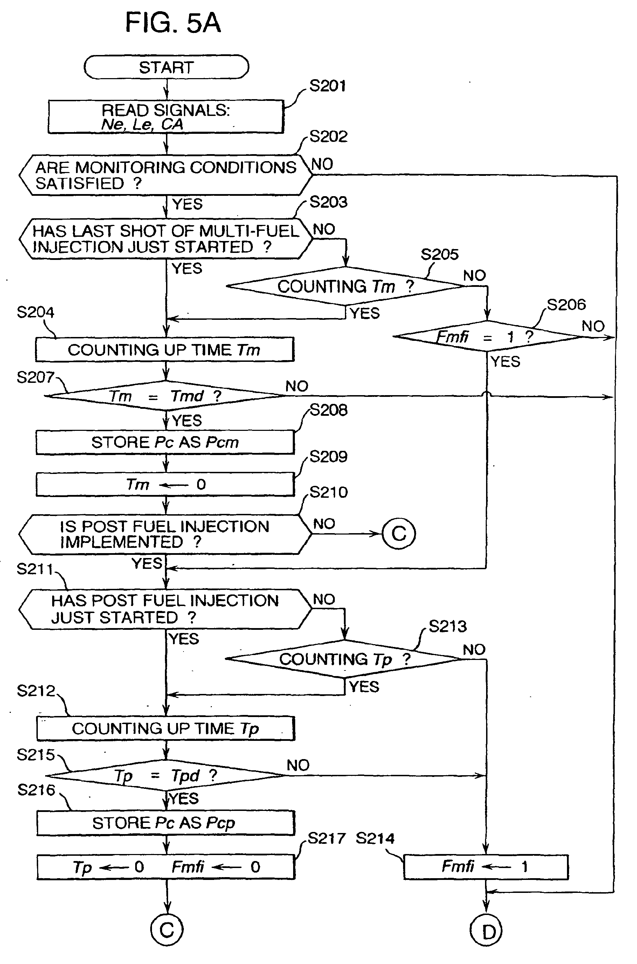

Figures 5A to 5C are respective parts of a flow chart illustrating a sequence routine of the diagnosis of abnormality of the fuel injection control according to a preferred embodiment of the present invention.

Referring to Figure 5A, when the sequence logic commences and control proceeds to a function block at step S201 where signals including at least a crank angle of rotation **CA** are read in. Subsequently, a judgement is made at step S202 as to whether predetermined monitoring conditions are satisfied for implementation of the diagnosis of abnormality. As was previously described, the monitoring conditions include that the predetermined period of time has passed after the engine operation has entered on a steady state, that the diagnosis of abnormality has not yet been implemented, that the diesel engine 1 has warmed up, i.e. the temperature of engine cooling water has exceeded the predetermined value, or the temperature of catalyst has exceeded the predetermined value, that the diesel engine 1 operates at an engine speed of rotation **Ne** lower than the predetermined value, and that the diesel engine 1 operates with an engine load lower than the predetermined value. When all of the monitoring conditions are satisfied, a judgement is made at step S203 as to whether the last shot of the multi-shot fuel injection has just started. When it is a point of time immediately after a start of the last shot of the multi-shot fuel injection, a timer starts counting up time **Tm** at step S204. The timer monitors progress of the duration of main injection pressure pulsation **Tmd.** On the other hand, when it is not a point of time immediately after a start of the last shot of the multi-shot fuel injection, another judgement is made at step S205 as to whether the time counting is in progress. When in progress, the timer continues to count time **Tm** at step S204. On the other hand, when the counter is at rest, a judgement is subsequently made at step S206 as to whether a monitor flag **Fmji** has been set to a state of "1". The monitor flag **Fmfi** set to the state of "1" indicates that the post fuel injection is being monitored. In the event where the monitor flag **Fmfi** is down or reset to a state of "0," the sequence logic orders return.

When the time counting is in progress, a judgement is made at step S207 as to whether the counted time **Tm** has reached the duration of main injection pressure pulsation **Tmd.** In the event where the counted time **Tm** is less than the duration of main injection pressure pulsation **Tmd,** the sequence logic orders return. On the other hand, the counted time **Tm** has reached the duration of main injection pressure pulsation **Tmd,** after storing the current common rail pressure **Pc** as a diagnostic pressure **Pcm** for the diagnosis of abnormality of the main fuel injection control at step S208 and successively resetting the time **Tm** to 0 (zero) at step S209, a judgement is made at step S210 as to whether the post fuel injection is scheduled after the multi-shot fuel injection. When the monitor flag *Fmfi* is in the state of "1" indicating that the post fuel injection is being monitored at step S206, or when the post fuel injection is scheduled at step S210, in order to implement the diagnosis of abnormality of the post fuel injection, a judgement is made at step S211 as to whether the post fuel injection has just started. When it is a point of time immediately after a start of the post fuel injection, the timer starts counting up time **Tp** at step S212. The timer monitors progress of the duration of post injection pressure pulsation **Tpd**. On the other hand, when it is not a point of time immediately after a start of the post fuel injection, another judgement is made at step S213 as to whether the time counting is in progress. In the event where the counter is at rest, after resetting the monitor flag **Fmfi** down to the state of "0" at step S214, the sequence logic orders return.

When it is immediately after a start of the post fuel injection at step S211, or when the time counting is in progress at step S213, the timer continues to count time **Tp** at step S212. Subsequently, a judgement is made at step S215 as to whether the counted time **Tp** has reached the duration of post injection pressure pulsation **Tpd.** In the event where the counted time **Tp** is less than the duration of post injection pressure pulsation **Tpd,** after setting up the monitor flag **Fmfi** at step S214, the sequence logic orders return. On the other hand, the counted time **Tp** has reached the duration of post injection pressure pulsation **Tpd**, the current common rail pressure **Pc** is stored as a diagnostic pressure **Pcp** for the diagnosis of abnormality of the post fuel injection control at step S216. Successively, the monitor flag **Fmfi** is reset down and the timer is reset to 0 (zero) at step S217.

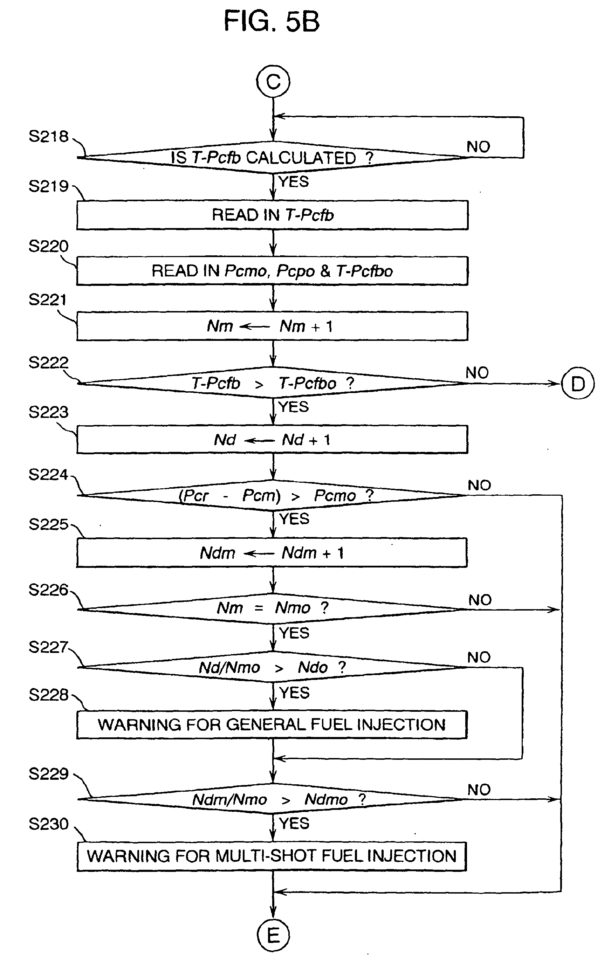

Referring to Figure 5B, after waiting for the calculation of the feedback control value **T-Pcfb** to be completed in the process of the common rail pressure control at step S218, the feedback control value **T-Pcfb** is read in at step S219. At step S220, diagnostic threshold values, which are limits for regarding the fuel injection control normal, are read out to make the diagnoses of abnormality of the main fuel injection control, the post fuel injection control, the general fuel injection control, respectively. The diagnostic threshold values includes a threshold value **Pcmo** for making the diagnosis of abnormality of the main fuel injection control on the basis of the diagnostic pressure **Pcm,** a threshold value **Pcpo** for making the diagnosis of abnormality of the post fuel injection control on the basis of the diagnostic pressure **Pcp,** and a threshold value **T-Pcfbo** for making the diagnosis of abnormality of the general fuel injection control on the basis of the feedback control value **T-Pcfb**. These diagnostic threshold values **Pcmo**, **Pcpo** and **T-Pcfbo** are defined with respect to an amount of main fuel injection (a basic amount of fuel injection), an amount of post fuel injection and a common rail pressure before main fuel injection and stored in the form of map in the memory of the ECU 40. The map defines such that the threshold values **Pcmo**, **Pcpo** and **T-Pcfbo** increase as the amount of fuel injection becomes large and as the common rail pressure **Pc** increases.

Subsequently, after changing the frequency of monitoring the main fuel injection control **Nm** by an increment of 1 (one) at step S221, a judgement is made at step S222 as to whether the feedback control value **T-Pcfb** exceeds the threshold value **T-Pcfbo,** i.e. whether the general fuel injection control is regarded as abnormal on the whole. In the event where the fuel injection is regarded as abnormal, after changing the frequency of abnormalities of the general fuel injection control **Nd** by an increase by 1 (one) at step S223, a judgement is made at step S224 as to whether a difference of the target common rail pressure **Pcr** from the diagnostic pressure **Pcm,** for the main fuel injection exceeds the threshold value **Pcmo** for making the diagnosis of abnormality of the main fuel injection control, i.e. whether the main fuel injection control is regarded as abnormal. When the difference of the target common rail pressure **Pcr** from the diagnostic pressure **Pcm** is greater than the threshold value **Pcmo**, this indicates that the main fuel injection control is regarded as abnormal, then, the frequency of abnormalities of the main fuel injection control **Ndm** is changed by an increment of 1 (one) at step S225. Subsequently, when the frequency of monitoring **Nm** has reached a predetermined reference frequency of monitoring **Nmo** at step S226, a judgement is made at step S227 as to whether a ratio of the frequency of abnormalities of the general fuel injection control **Nd** relative to the reference frequency of monitoring **Nmo** is greater than a threshold value **Ndo**. When the threshold value **Ndo** is exceeded, a warning is given to indicate that the general fuel injection control is abnormal at step S228. After giving a warning of abnormality of the general fuel injection at step S228, or when the general fuel injection control is regarded as normal at step S227, a judgement is made at step S229 as to whether a ratio of the frequency of abnormalities of the main fuel injection control **Ndm** relative to the reference frequency of monitoring **Nmo** is greater than a threshold value **Ndmo**.

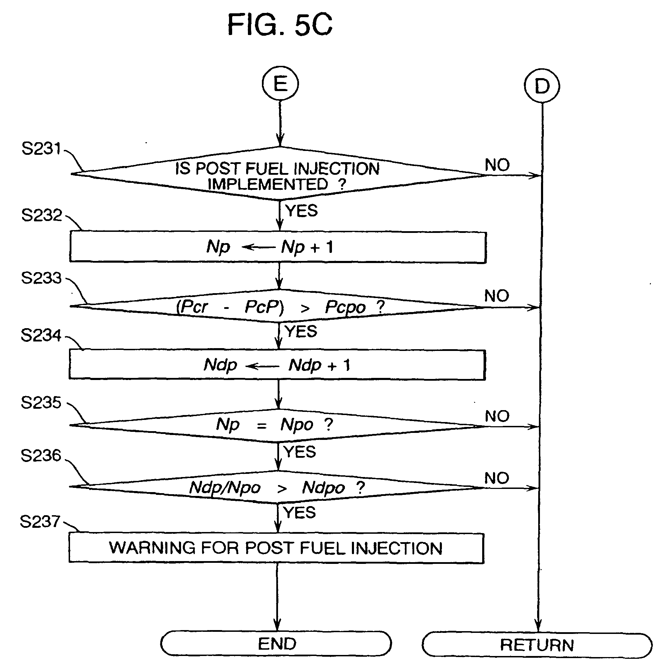

Referring to Figure 5C, in the event where the main fuel injection control is regarded as nonnal at step S224, where the monitoring has not yet repeated the specified times at step S226 or where the threshold value **Ndo** is exceeded at step S229, or after giving a warning of abnormality of the main fuel injection control at step S230 when the ratio of the frequency of abnormalities of the main fuel injection control **Ndm** relative to the reference frequency of monitoring **Nmo** is greater than the threshold value **Ndmo**, a judgement is successively made at step S231 as to whether the post fuel injection is implemented after the main fuel injection. When the post fuel injection is implemented, after changing the frequency of monitoring the post fuel injection control **Np** by an increase by 1 (one) at step S232, a judgement is made at step S233 as to whether a difference of the target common rail pressure **Pcr** from the diagnostic pressure **Pcp** for the post fuel injection exceeds a threshold value **Pcpo** for making the diagnosis of abnormality of the post fuel injection control, i.e. whether the post fuel injection control is regarded as abnormal. When the difference of the target common rail pressure **Pcr** from the diagnostic pressure **Pcp** is greater than the threshold value **Pcpo,** this indicates that the post fuel injection control is regarded as abnormal then, the frequency of abnormalities of the post fuel injection control **Npd** is changed by an increment of 1 (one) at step S234. Subsequently, when the frequency of monitoring **Np** has reached a predetermined reference frequency of monitoring **Npo** at step S235, a judgement is made at step S236 as to whether a ratio of the frequency of abnormalities of the post fuel injection control **Ndp** relative to the reference frequency of monitoring **Npo** is greater than a threshold value **Ndpo.** When the threshold value **Ndpo** is exceeded, a warning is given to indicate that the post fuel injection control is abnormal at step S237. In the event where the post fuel injection is implemented after the main fuel injection at step S231, where the post fuel injection control is regarded as normal at step S233 or where the monitoring is not yet repeated the specified times at step S235, or after giving a warning of abnormality of the post fuel injection at step S237, the sequence logic orders return.

As described above, because it is determined on the basis of a ratio of a frequency of abnormalities of fuel injection control relative to the frequency of monitoring the fuel injection control whether a warning of abnormality of the fuel injection control is given or not, the warning of abnormality of the fuel injection control is not given even when the fuel injection control is temporarily regarded as abnormal unless the abnormality of the fuel injection control is detected so often. This results from the consideration that the fuel injection control is possibly judged to be abnormal during a transitional engine operating condition although the fuel injection device normally operates. Furthermore, because the diagnosis of abnormality is made not only for the fuel injection device but also for the main fuel injection control and the post fuel injection control, respectively, it is made easy to clear up the causes of an abnormality. The use of a measurement of common rail pressure after duration of pulsation of the common rail pressure increases the precision of the diagnoses of abnormality of the main fuel injection control and the post fuel injection control. Furthermore, because, when making the diagnosis of abnormality of the main fuel injection control, the post fuel injection timing is corrected so as to put the control of a rise in common rail pressure practical after convergence of pulsation of the common rail pressure caused following the post fuel injection, the common rail pressure can be risen to an intended level before the following main fuel injection. As a result, the diagnosis of abnormality of the main fuel injection control is more precise.

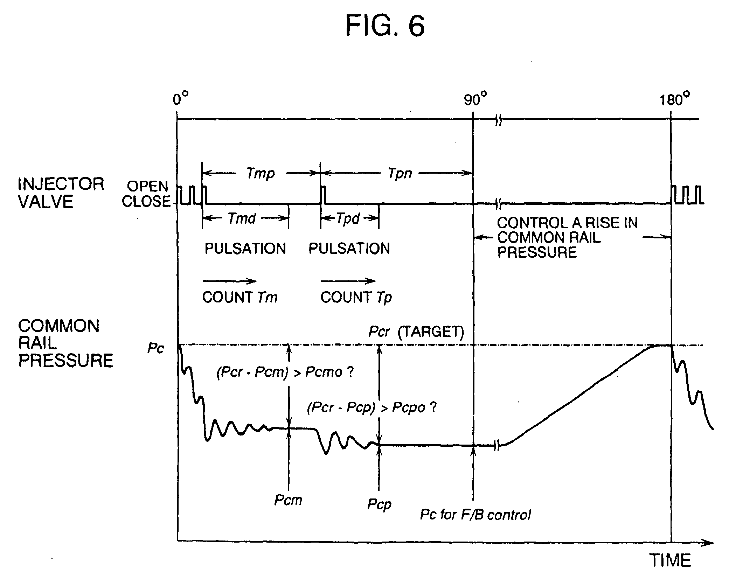

Referring to Figure 6 showing a time chart of operation of the fuel injector during the diagnosis of operational abnormality of fuel injection while the diesel engine 1 operates at a speed of rotation, when the multi-shot fuel injection is implemented, while the common rail pressure **Pc** declines every shot of the multi-shot fuel injection, pulsation of the common rail pressure occurs in the common rail 6. The pulsation of common rail pressure converges at an end of the duration of main injection pressure pulsation **Tmd**. Similarly, while the common rail pressure **Pc** declines following the post fuel injection, pulsation of the common rail pressure occurs in the common rail 6. The pulsation of common rail pressure converges at an end of the duration of post injection pressure pulsation **Tpd.** The duration of main injection pressure pulsation **Tmd** is determined as a period of time from a start of the last shot of the multi-shot fuel injection, and the duration of post injection pressure pulsation *Tpd* is determined as a period of time from a start of the post fuel injection. Accordingly, the timer starts counting a time *Tm* immediately after the start of the last shot of the multi-fuel injection so as thereby to monitor progress of the duration of main injection pressure pulsation *Tmd*. Similarly, the timer starts counting a time *Tp* immediately after the start of the post fuel injection so as thereby to monitor progress of the duration of post injection pressure pulsation *Tpd.* When the timer counts up a time *Tm* equivalent the duration of main injection pressure pulsation *Tmd,* the current common rail pressure *Pc* is stored as a diagnostic pressure *Pcm* in the memory. A difference of the current common rail pressure *Pc,* namely the a diagnostic pressure *Pcm,* from the target common rail pressure *Pcr* is compared with the threshold value *Pcmo* for making the diagnosis of abnormality of the main fuel injection control. When the difference (*Pcr - Pcm*) exceeds the threshold value *Pcmo,* the main fuel injection control is regarded as abnormal. Similarly, when the timer counts up a time *Tp* equivalent the duration of post injection pressure pulsation *Tpd,* the current common rail pressure *Pc* is stored as a diagnostic pressure *Pcp* in the memory. A difference of the current common rail pressure *Pc,* namely the a diagnostic pressure *Pcp,* from the target common rail pressure *Pcr* is compared with the threshold value *Pcpo* for making the diagnosis of abnormality of the post fuel injection control. When the difference (*Pcr - Pcp*) exceeds the threshold value *Pcpo,* the post fuel injection control is regarded as abnormal.

When the cam angle of rotation reaches an angle of ATDC 90°, the common rail pressure *Pc* for the feedback (F/B) control of common rail pressure is read out to determine a valve closing timing of the relief valve 12a. When the valve closing timing is reached, the relief valve 12a is closed, so as thereby to rise the current common rail pressure toward the target common rail pressure *Pcr.*

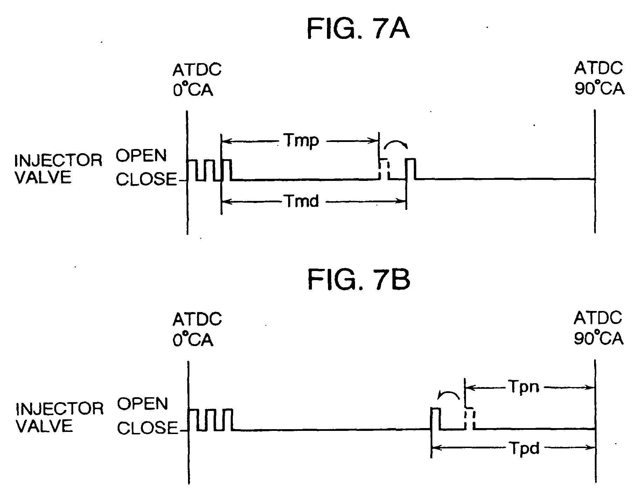

Figures 7A and 7B show time charts of operation of the fuel injector 5 for the post fuel injection while the diesel engine 1 operates at a speed of rotation relatively higher than the speed of rotation in connection with the time chart shown in Figure 6. As shown in Figure 7A, while the diesel engine 1 operates at a comparatively high speed of rotation, the period of time after main fuel injection *Tmp,* which is from a start of the last shot of the multi-shot fuel injection to a start of the scheduled post fuel injection (depicted by a chained line), is possibly shorter than the duration of main injection pressure pulsation *Tmd* In such an event, the post fuel injection is implemented at a timing retarded after the duration of main injection pressure pulsation *Tmd* as depicted by a solid line. As a result, the post fuel injection is prevented from being affected by pulsation of the common rail pressure resulting from the main fuel injection. In addition, a current common rail pressure can be detected after convergence of the pulsation of common rail pressure resulting from the main fuel injection in order to make the diagnosis of abnormality.

As shown in Figure 7B, while the diesel engine 1 operates at a comparatively high speed of rotation, the period of time after post fuel injection *Tpn,* which is from a start of the scheduled post fuel injection (depicted by a chained line) to a crank angle of ATDC 90° (at which the common rail pressure *Pc* for the feedback control), is possibly shorter than the duration of post injection pressure pulsation *Tpd* In such an event, the post fuel injection is implemented at a timing advanced by a time longer than the duration of post injection pressure pulsation *Tmd* from the crank angle of ATDC 90° as depicted by a solid line. As a result, the detection of the common rail pressure *Pc* for the feedback control is prevented from being affected by pulsation of the common rail pressure resulting from the post fuel injection.

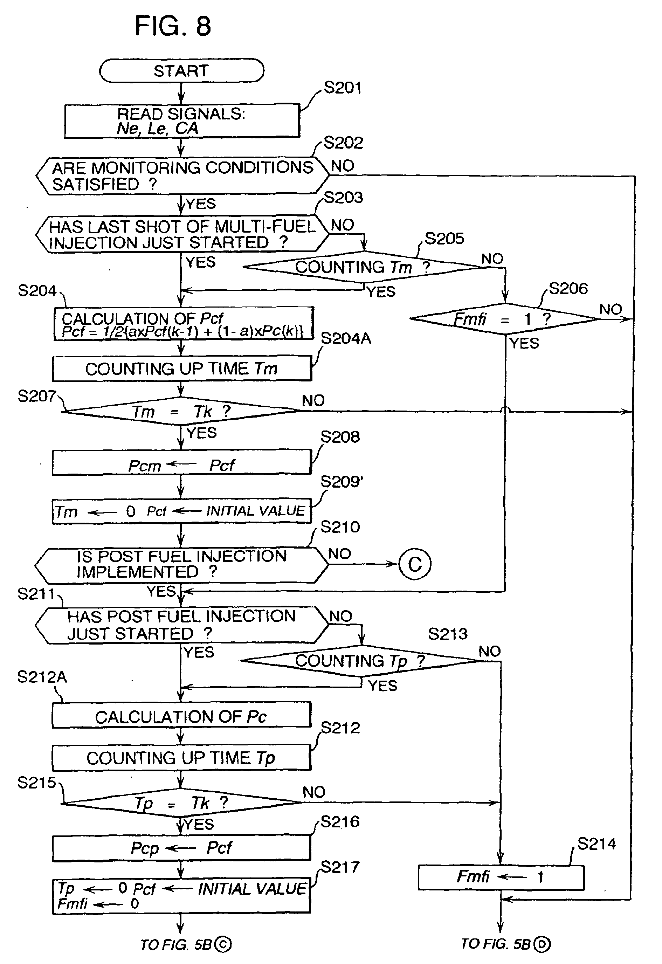

Figure 8 shows a part of a flow chart illustrating another sequence routine of the diagnosis of abnormality of the fuel injection control in accordance with another embodiment of the present invention, which corresponds to the part of the flow chart shown in Figure 5A. The sequence routine of the other embodiment includes other parts of the flow chart identical with those shown in Figure 5B and 5C. In Figure 8, respective steps denoted by the same signs as those used in Figure 5A are identical in function and operation with those shown in Figure 5A.

As shown in Figure 8, when the sequence logic commences and control proceeds to a function block at step S201 where signals including at least a crank angle of rotation *CA* are read in. Subsequently, a judgement is made at step S202 as to whether predetermined monitoring conditions are satisfied for implementation of the diagnosis of abnormality. When all of the monitoring conditions are satisfied, a judgement is made at step S203 as to whether the last shot of the multi-shot fuel injection has just started When it is a point of time immediately after a start of the last shot of the multi-shot fuel injection at step S203, a calculation is made at step S204A to provide a leveled or filtered value of common rail pressure *Pcf* for the diagnosis of abnormality of the main fuel injection. The filtered value of common rail pressure *Pcf* is obtained by causing a preceding filtered value to reflect in the current common rail pressure *Pc* at a specified rate of *a*. Specifically, the filtered value of common rail pressure *Pcf* is given by the following equation:

$$Pcf = 1/2\{a \times Pcf(k-1) + (1-a) \times Pc(k)\}$$

where *Pcf*(*k*-1) is the preceding filtered value of common rail pressure, *Pc*(*k*) is the current common rail pressure and the value of *a* is greater than zero but less than 1.

After the calculation of a current filtered value of common rail pressure *Pcf*, the timer starts counting up time

*Tm* at step S204 in order to monitors progress of the duration of main injection pressure pulsation *Tmd(k)*. In the sequence logic, since the diagnosis of abnormality is made on the basis of the filtered value of common rail pressure *Pcf*, it is less affected by the pulsation of common rail pressure. Therefore, the duration of main injection pressure pulsation *Tmd(k)* is shorter than duration of main injection pressure pulsation *Tmd* used in the diagnosis of abnormality on the basis on the common rail pressure *Pc*. On the other hand, when it is not a point of time immediately after a start of the last shot of the multi-shot fuel injection, another judgement is made at step S205 as to whether the time counting is in progress. When the counter is at rest, a judgement is subsequently made at step S206 as to whether a monitor flag *Fmfi* has been set to a state of "1". On the other hand, when in progress, after making the calculation of a filtered value of common rail pressure *Pcf* at step S204A, the timer continues to count time *Tm* at step S204B. Further, in the event where the monitor flag *Fmfi* is down or reset to a state of "0," the sequence logic orders return.

When the time counting is in progress, a judgement is made at step S207 as to whether the counted time *Tm* has reached the duration of main injection pressure pulsation *Tk*. In the event where the counted time *Tm* is less than the duration of main injection pressure pulsation *Tk*, the sequence logic orders return. On the other hand, the counted time *Tm* has reached the duration of main injection pressure pulsation *Tk*, after storing the current filtered value of common rail pressure *Pcf* as a diagnostic pressure *Pcm* for the diagnosis of abnormality of the main fuel injection control at step S208, and successively resetting the time *Tm* to 0 (zero) and the filtered value of common rail pressure *Pcf* to an initial value at step S209', a judgement is made at step S210 as to whether the post fuel injection is scheduled after the multi-shot fuel injection. When the flag *Fmfi* is in the state of "1" indicating that the post fuel injection is being monitored at step S206, or when the post fuel injection is implemented at step S210, in order to implement the diagnosis of abnormality of the post fuel injection, a judgement is made at step S211 as to whether the post fuel injection has just started. In the event where the post fuel injection is not implemented at step S210, the sequence logic proceeds to the step S218 of the sequence routine shown by the flow chart in Figures 5B and 5C.

When it is a point of time immediately after a start of the post fuel injection, or in the event where the time counting is in progress at step S213 even when it is not a point of time immediately after a start of the post fuel injection at stepS211, a calculation is made at step S212A to provide a filtered value of common rail pressure *Pcf* for the diagnosis of abnormality of the post fuel injection in the same manner as specifically described above with regard to step S204A. On the other hand, in the event where the counter is at rest, after resetting the monitor flag *Fmfi* down to the state of "0" at step S214, the sequence logic returns.

Subsequently, after causing the timer to count up time *Tp* at step S212, a judgement is made at step S215 as to whether the counted time *Tp* has reached the duration of post injection pressure pulsation *Tk*. In the judgement, the duration of post injection pressure pulsation *Tk* is identical with the duration of main injection pressure pulsation *Tk* and is shorter than the duration of post injection pressure pulsation *Tpd* used in the diagnosis of abnormality on the basis on the common rail pressure *Pc*. In the event where the counted time *Tp* is less than the duration of post injection pressure pulsation *Tpd(k)*, after setting up the monitor flag *Fmfi* at step S214, the sequence logic orders return. On the other hand, the counted time *Tp* has reached the duration of post injection pressure pulsation *Tpd(k)*, the current filterd value of common rail pressure *Pcf* is stored as a diagnostic pressure *Pcp* for the diagnosis of abnormality of the post fuel injection control at step S216. Successively, the monitor flag *Fmfi* is reset down and the time *Tp* and the filtered value of common rail pressure *Pcf* are reset to 0 or an initial value at step S217'. Thereafter, the sequence logic proceeds to the step S218 of the sequence routine shown by the flow chart in Figures 5B and 5C.

The use of filtered value of common rail pressure *Pcf* in the diagnosis of control abnormality of the fuel injection device shortens the duration of main injection pressure pulsation *Tmd(K)* and duration of post injection pressure pulsation *Tpd(k)* as compared with those *Tmd* and *Tpd* in the previous embodiment in order to avoid erroneous diagnoses due to pulsation of common rail pressure. In consequence, the correction value of the post fuel injection timing for the diagnosis of abnormality, which is used in the sequence routine of fuel injection control illustrated by the flow chart in Figure 4, decreases or reaches zero. This not only enables easy implementation of the fuel injection control demanded on the basis engine operating conditions but also makes it unnecessary to make the correction of post fuel injection timing. Furthermore, since the filtered value *Pcf* is in the diagnosis of abnormality of the post fuel injection is provided separately from that used in the diagnosis of abnormality of the multi-shot fuel injection as the main fuel injection, the diagnosis of abnormality of the post fuel injection is not affected by the multi-shot fuel injection.

The filtered value pf common rail pressure *Pcf* may be substituted for the common rail pressure used in the sequence routine of common rail pressure control illustrated by the flow chart in Figure 3.

Although, in the above embodiments, the description has been focused on the diagnosis of abnormality of fuel injection, in the event where the diagnosis of abnormality during the fuel injection control, the sequence routine illustrated by the flow chart in Figure 4 may proceed to the judgement concerning the post fuel injection directly after determining patterns of the multi-shot fuel injection for the main fuel injection and the post fuel injection at step S103 without implementing the judgement concerning the monitoring conditions made at step S104. In this control, the post fuel injection is timed so as to start at a point of time after the duration of main injection pressure pulsation *Tmd* when the period of time after main fuel injection *Tmp* between a start of the last shot of the multi-shot fuel injection and a start of the post fuel injection is shorter than the duration of main injection pressure pulsation **Tmd**. As a result, fuel injection pressure during the post fuel injection is free from pulsation of common rail pressure caused accompanying the main fuel injection, which is advantageous in terms of injecting a given amount of fuel through the post fuel injection. Further, the post fuel injection timing is advanced by the duration of post injection pressure pulsation **Tpd**. from a crank angle of ATDC 90°. As a result, the control of rising the common rail pressure for the subsequent main fuel injection is prevented from being affected by pulsation of the common rail pressure resulting from the post fuel injection, so as to be advantageous for providing a given amount of fuel injection.

In place of performing the diagnosis of abnormality of fuel injection on the basis of a difference between the diagnostic pressure **Pcm** and the target common rail pressure **Pcr**, in other words, on the basis of whether a drop in common rail pressure is greater than the threshold value, the diagnosis of abnormality may be performed on the basis of a difference of a current drop in common rail pressure from a drop in common rail pressure that is relied on when the fuel injection control is normally performed. According to the variant, an event where an actual amount of fuel injection is smaller than a given amount of fuel according to an demand of engine operating condition is diagnosed as abnormal similarly to performing the diagnosis of abnormality on the basis of a filtered value of common rail pressure.

The diagnosis of abnormality of the main fuel injection is performed for the batch fuel injection (one-shot fuel injection) as well as the multi-fuel injection.

Although the above description has been provided in connection with a diesel engine, however, the fuel injection control and the diagnosis of abnormality of the fuel injection control of the present invention may be performed in connection with a gasoline engine of a type which injects fuel directly into combustion chambers through an accumulator.

## Claims

1. An engine control system for an engine which is equipped with fuel injectors (5) for injecting fuel directly into combustion chambers (4) of said engine, accumulator means (6) for accumulating fuel at a high pressure and directing said fuel to said fuel injectors (5), pressure regulator means for regulating fuel pressure in said accumulator means (6), fuel injection control means (40) for performing fuel injection in a pattern in which a given amount of fuel is injected through a main fuel injection near a top dead center of a compression stroke and a post fuel injection on an expansion stroke after said main fuel injection, monitoring means (6b) for monitoring said fuel pressure in said accumulator means (6), and engine operation control means (40) for performing a diagnosis of abnormality of said fuel injection control on the basis of a monitored fuel pressure in said accumulator (6) monitored by said pressure monitoring means (6b) at injection of fuel by said fuel injector (5), **characterized by**:

   said engine operation control means (40) determining a delay period of time (Tmd, Tpd) for which said engine operation control means (40) delays a timing of detection of said fuel pressure in said accumulator means (6) after said fuel injection in order to eliminate measurement while the fuel pressure pulsates, whereby said engine operation control means (40) sets said delay period of time (Tmd, Tpd) longer as said fuel pressure at fuel injection becomes larger; and
   a timer counting up time (Tm, Tp) starting from fuel injection by said fuel injector;

   wherein, when the time (Tm, Tp) counted by the timer has reached the duration (Tmd, Tpd) of a pressure pulsation, the current monitored fuel pressure (Pc) is stored as a diagnostic pressure (Pcm, Pcp) for the diagnosis of abnormality of fuel injection control.

2. An engine control system as defined in claim 1, wherein said fuel injection control means (40) makes a judgement as to whether said post fuel injection is scheduled to the implemented, and said engine operation control means (40) performs said diagnosis of abnormality of fuel injection control on said main fuel injection, and wherein said fuel injection control means (40), when the period of time (Tmp) after main fuel injection, which is between the main fuel injection and a start of the post fuel injection, is equal or a shorter than the duration (Tmd) of main injection pressure pulsation, changes the timing of said post fuel injection to a point of time at which the duration (Tmd) of main injection pressure pulsation terminates so as thereby to detect a current common rail pressure (Pc) for the diagnosis of abnormality of the main fuel injection and implement the post fuel injection without being affected by the pulsation of common rail pressure.

## Patentansprüche

1. Motorsteuerungssystem für einen Motor, der ausgestattet ist mit Einspritzaggregaten (5), um Kraftstoff direkt in Brennräume (4) dieses Motors einzuspritzen, Speichermitteln (6), um Hochdruckkraftstoff zu speichern und diesen Kraftstoff zu den Einspritzaggregaten (5) zu leiten, Kraftstoffeinspritzungssteuermitteln (40), um die Kraftstoffeinspritzung in einem Muster durchzuführen, in dem eine bestimmte Kraftstoffmenge durch eine Haupteinspritzung nahe an einem oberen Totpunkt eines Kompressionshubs und eine Nacheinspritzung bei einem Expansionshub nach dieser Haupteinspritzung durchgeführt wird, Oberwachungsmitteln, um den Kraftstoffdruck in den Speichermitteln (6) zu überwachen, und Motorbetriebssteuermitteln (40), um eine Diagnose der Anomalie der Kraftstoffeinspritzungsregelung auf der Basis eines überwachten Kraftstoffdrucks im Speicher (6) durchzuführen, der bei der Kraftstoffeinspritzung durch das Einspritzaggregat (5) vom Drucküberwachungsmittel (6b) überwacht wird, **gekennzeichnet durch**:

das Motorbetriebssteuermittel (40), das eine Verzögerungszeitperiode (Tmd, Tpd) bestimmt, um welche das Motorbetriebssteuermittel (40) einen Zeitpunkt der Erkennung des Kraftstoffdrucks im Speichermittel (6) nach der Kraftstoffeinspritzung verzögert, um die Messung auszuschließen, während der Kraftstoffdruck pulsiert, wobei dieses Motorbetriebssteuermittel (40) die Verzögerungszeitperiode (Tmd, Tpd) länger einstellt, wenn der Kraftstoffdruck bei der Kraftstoffeinspritzung zunimmt; und
einen Zähler, der die Zeit (Tm, Tp) von der Kraftstoffeinspritzung **durch** das Einspritzaggregat an vorwärtszählt;

wobei, wenn die vom Zähler gezählte Zeit (Tm, Tp) die Dauer (Tmd, Tpd) einer Druckpulsation erreicht hat, der aktuell überwachte Kraftstoffdruck (Pc) als ein Diagnosedruck (Pcm, Pcp) zur Diagnose der Anomalie der Kraftstoffeinspritzregelung gespeichert wird.

2. Motorsteuerungssystem wie in Anspruch 1 definiert, wobei das Kraftstoffeinspritzsteuermittel (40) eine Beurteilung durchführt, ob die Nacheinspritzung zu der durchgeführten programmiert wird, und das Motorbetriebssteuermittel (40) die Diagnose der Anomalie der Kraftstoffeinspritzregelung bei der Haupteinspritzung durchführt, und wobei, wenn die Zeitperiode (Tmp) nach der Haupteinspritzung, die zwischen der Haupteinspritzung und einem Beginn der Nacheinspritzung liegt, kleiner oder gleich der Dauer (Tmd) der Haupteinspritzdruckpulsation ist, das Kraftstoffeinspritzsteuermittel (40) den Zeitpunkt der Nacheinspritzung auf einen Zeitpunkt verschiebt, an dem die Dauer (Tmd) der Haupteinspritzdruckpulsation endet, um **dadurch** einen aktuellen Common Rail-Druck (Pc) zur Diagnose der Anomalie der Haupteinspritzung zu erkennen und die Nacheinspritzung durchzuführen, ohne von der Pulsation des Common Rail-Drucks beeinträchtigt zu werden.

**Revendications**

1. Système de contrôle de moteur pour un moteur qui est équipé d'injecteurs de carburant (5) en vue de l'injection directe de carburant dans les chambres de combustion (4) dudit moteur, de moyens d'accumulation (6) en vue d'accumuler le carburant à haute pression et en vue de diriger ledit carburant dans lesdits injecteurs de carburant (5), de moyens de régulation de la pression en vue de réguler la pression du carburant dans lesdits moyens d'accumulation (6), de moyens de contrôle de l'injection de carburant (40) en vue d'effectuer l'injection du carburant dans un motif dans lequel une quantité donnée de carburant est injectée à travers une injection de carburant principale à proximité d'un point mort supérieur d'une course de compression, et en vue d'effectuer une post-injection de carburant sur une course d'expansion après ladite injection de carburant principale, de moyens de suivi (6b) en vue de suivre ladite pression de carburant dans lesdits moyens d'accumulation (6), et des moyens de contrôle du fonctionnement du moteur (40) en vue d'effectuer un diagnostic d'anomalie dudit contrôle d'injection de carburant sur la base de la pression de carburant suivie dans ledit accumulateur (6) suivi par lesdits moyens de suivi de la pression (6b) à l'injection du carburant par ledit injecteur de carburant (5), **caractérisé par**:

ledit moyen de contrôle du fonctionnement du moteur (40), déterminant une période de retard de temps (Tmd, Tpd), pendant laquelle ledit moyen de contrôle du fonctionnement du moteur (40) retarde une synchronisation/un minutage de détection de ladite pression de carburant dans ledit moyen d'accumulation (6) après ladite injection de carburant de manière à éliminer la mesure alors que la pression subit des pulsations, et de ce fait ledit moyen de contrôle du fonctionnement du moteur (40) règle ladite période de retard de temps (Tmd, Tpd) à un niveau d'autant plus long que ladite pression de carburant à l'injection de carburant devient plus grande; et
une minuterie comptabilisant le temps (Tm, Tp) s'écoulant à compter du moment de l'injection du carburant par ledit injecteur de carburant;

dans lequel, lorsque le temps (Tm, Tp) comptabilisé par la minuterie a atteint la durée (Tmd, Tpd) d'une pulsation de pression, la pression de carburant suivie courante (Pc) est sauvegardée en tant que pression diagnostique (Pcm, Pcp) pour le diagnostic d'anomalie du contrôle d'injection de carburant.

2. Système de contrôle de moteur selon la revendication 1, dans lequel le moyen de contrôle d'injection de carburant (40) émet un jugement quant à savoir si ladite post-injection de carburant est prévue comme devant être mise en oeuvre et dans lequel ledit moyen de contrôle du fonctionnement du moteur (40) effectue ledit diagnostic d'anomalie du contrôle d'injection de carburant sur ladite injection principale de carburant, et dans lequel ledit moyen de contrôle d'injection de carburant (40), lorsque la période de temps (Tmp) après l'injection de carburant principale, qui est située entre l'injection de carburant principale et un démarrage de la post-injection de carburant, est égale ou plus courte que la durée (Tmd) de pulsation de la pression d'injection principale, change la synchronisation/le minutage de ladite post-injection de carburant à un moment auquel la durée (Tmd) de la pulsation de pression d'injection principale se termine, de manière à détecter ainsi une pression courante dite à rampe commune (Pc) pour le diagnostic d'anomalie de l'injection de carburant principale et de manière à mettre en oeuvre la post-injection de carburant sans être affecté par la pulsation de la pression dite à rampe commune.

FIG. 1

# FIG. 2

INTAKE    COMPRESSION    EXPANSION (COMBUSTION)    EXHAUST

MAIN FUEL INJECTION

(A) ONE-SHOT INJECTION

MALTI-SHOT INJECTION FOR MAIN FUEL INJECTION

$\Delta t$

(B) TWO-SHOT INJECTION

MALTI-SHOT INJECTION FOR MAIN FUEL INJECTION

(C) THREE-SHOT INJECTION

$\Delta t$

CRANK ANGLE

TDC   ATDC 35°CA

EP 1 128 049 B1

## FIG. 3A

START

S1 — READ SIGNALS:
$Ne, Le, CA$

S2 — ATDC 90°CA ? — NO

S5 — $Fcpc = 1$ ? — NO

YES (S2)

YES (S5)

S3 — $Fcpc \longleftarrow 1$

S4 — DETECTION OF $PC$

S6 — OPEN RELIEF VALVE

S7 — SET $Qt$

S8 — CALCULATION OF $T\text{-}Pcv$
$T\text{-}Pcv = a \times Ne + b \times Pc + c \times Qt + ofs$

S9 — DETERMINATION OF $Pcr$ FROM $Qt$

S10 — CALCULATION OF $T\text{-}Pcfb$ FROM $Pcr$ & $Pc$

S11 — RESTRICTION OF $T\text{-}Pcfb$

S12 — CALCULATION OF $T\text{-}Pct$
$T\text{-}Pcv = T\text{-}Pcv + T\text{-}Pcfb$

S13 — DETERMINATION OF RELIEF VALVE
CLOSING TIMING FROM $T\text{-}Pct$

B

A

# FIG. 3B

Ⓐ                             Ⓑ

S14 — CLOSING TIMING ? — NO

YES

S15 — OPEN RELIEF VALVE

S16 — ATDC 180°CA ? — NO

YES

S17 — OPEN RELIEF VALVE

S18 — $NL \leftarrow NL + 1$

S19 — $NL = \Sigma T\text{-}Pcfb$

S20 — $NL = NL0$ ?

S21 — $ofs = LN/NL0$ ?

S22 — $Fcpc \leftarrow 0$

RETURN

# FIG. 4

```
                    START

                                        S101
            READ SIGNALS:
            Ne, Le, CA

                                        S102
        DETERMINATION OF BASIC AMOUNT
        OF FUEL INJECTION

                                        S103
        DETERMINATION OF INJECTION
        PATTERNS FOR MULTI-SHOT FUEL
        INJECTION & POST FUEL INJECTION

                                        S104
  NO      ARE MONITORING CONDITIONS
          SATISFIED ?
                    YES
                                        S105
  NO      IS POST FUEL INJECTION
          IMPLEMENTED ?
                    YES
                                        S106
        DETERMINATION OF Tmd & Tpd
        FROM Pc

                                        S107
        DETERMINATION OF Tmp & Tpn FROM
        Ne AND FUEL INJECTION PATTERN

  S108
            Tmp  >  Tmd ?      NO                    S109
                    YES
                              CORRECTION OF TIMING OF POST
                              FUEL INJECTION

  S110
            Tpn  >  Tpd ?      NO
                    YES
                                                    S111
                              CORRECTION OF TIMING OF POST
                              FUEL INJECTION

                                        S112
            FUEL INJECTION

                    RETURN
```

22

## FIG. 5A

# FIG. 5B

$$\text{C}$$

S218 — IS *T-Pcfb* CALCULATED ? — NO

↓ YES

S219 — READ IN *T-Pcfb*

S220 — READ IN *Pcmo, Pcpo & T-Pcfbo*

S221 — $Nm \leftarrow Nm + 1$

S222 — $T\text{-}Pcfb > T\text{-}Pcfbo$ ? — NO → $\text{D}$

↓ YES

S223 — $Nd \leftarrow Nd + 1$

S224 — $(Pcr - Pcm) > Pcmo$ ? — NO

↓ YES

S225 — $Ndm \leftarrow Ndm + 1$

S226 — $Nm = Nmo$ ? — NO

↓ YES

S227 — $Nd/Nmo > Ndo$ ? — NO

↓ YES

S228 — WARNING FOR GENERAL FUEL INJECTION

S229 — $Ndm/Nmo > Ndmo$ ? — NO

↓ YES

S230 — WARNING FOR MULTI-SHOT FUEL INJECTION

$$\text{E}$$

# FIG. 5C

E          D

S231 — IS POST FUEL INJECTION IMPLEMENTED ?          NO →

YES

S232 — $Np \longleftarrow Np + 1$

S233 — $(Pcr - PcP) > Pcpo$ ?          NO →

YES

S234 — $Ndp \longleftarrow Ndp + 1$

S235 — $Np = Npo$ ?          NO →

YES

S236 — $Ndp/Npo > Ndpo$ ?          NO →

YES

S237 — WARNING FOR POST FUEL INJECTION

END          RETURN

# FIG. 6

INJECTOR VALVE

COMMON RAIL PRESSURE

OPEN
CLOSE

$Tmp$

$Tpn$

$Tmd$

$Tpd$

PULSATION

PULSATION

COUNT $Tm$

COUNT $Tp$

CONTROL A RISE IN COMMON RAIL PRESSURE

$Pcr$ (TARGET)

$Pc$

$(Pcr - Pcm) > Pcmo$ ?

$(Pcr - Pcp) > Pcpo$ ?

$Pcm$

$Pcp$

$Pc$ for F/B control

TIME

EP 1 128 049 B1

# FIG. 7A

# FIG. 7B

## FIG. 8

START

READ SIGNALS: *Ne, Le, CA* — S201

ARE MONITORING CONDITIONS SATISFIED ? — S202 — NO

YES

HAS LAST SHOT OF MULTI-FUEL INJECTION JUST STARTED ? — S203 — NO

COUNTING *Tm* ? — S205 — NO

YES

*Fmfi* = 1 ? — S206 — NO

YES

YES

S204 — CALCULATION OF *Pcf*
$Pcf = 1/2\{a \times Pcf(k-1) + (1-a) \times Pc(k)\}$

COUNTING UP TIME *Tm* — S204A

S207 — *Tm* = *Tk* ? — NO

YES

*Pcm* ⟵ *Pcf* — S208

*Tm* ⟵ 0   *Pcf* ⟵ INITIAL VALUE — S209'

IS POST FUEL INJECTION IMPLEMENTED ? — S210 — NO — Ⓒ

YES

S211 — HAS POST FUEL INJECTION JUST STARTED ? — NO

COUNTING *Tp* ? — S213 — NO

YES

YES

S212A — CALCULATION OF *Pc*

COUNTING UP TIME *Tp* — S212

S215 — *Tp* = *Tk* ? — NO

YES

*Pcp* ⟵ *Pcf* — S216

*Tp* ⟵ 0  *Pcf* ⟵ INITIAL VALUE
*Fmfi* ⟵ 0 — S217

*Fmfi* ⟵ 1 — S214

TO FIG. 5B Ⓒ

TO FIG. 5B Ⓓ